# EUROPEAN PATENT APPLICATION

(11) **EP 1 367 606 A1**
(43) Date of publication of application: **03.12.2003**
(21) Application number: 02380109.5
(22) Date of filing: 27.05.2002
(51) Int. Cl.: H01B 3/44, C08L 23/10

(54) **Covering for low voltage cables**

(71) Applicant: Draka Cables Industrial S.A., 08130 Santa Perpetua de Mogoda (ES)
(72) Inventor: Ruano Arbues, Alfredo, 08130 Santa Perpetua de Mogoda (ES)
(74) Representative: Marques Alos, Fernando

(57) **Abstract**

**"COVERING FOR LOW VOLTAGE CABLES",** class C, whose service temperature is between -40°C and +125°C, for cars, aviation, boats, with reduced and/or ultrafine insulation, free of halogens and of polymer composition. The covering is made using a polymer thermoplastic-based (non-reticulated) material formulated as a blend of: a rigid phase, a blend of different polypropylenes with nucleant agents, of an adequate fluidity for extrusion; an elastic phase, a blend of different polyethylenes of an adequate fluidity for extrusion, of densities > 0.906 g/cm³; and a fireproof mineral load, Magnesium Hydroxide, with synergic agents.

## Description

The objective of this invention, as expressed in the statement to this descriptive report, consists of a "**COVERING FOR LOW VOLTAGE CABLES**", specifically for the class C type of cable, for cars, aviation, boats, etc., of reduced thermoplastic insulation (thickness of insulating wall: 0.25 mm) and/or ultrafine insulation (thickness of insulating wall: 0.20 mm). They comprise a service temperature of between -40°C and +125°C, and are free of halogens and heavy metals, i.e. environment friendly.

Specifically, the proposed covering for electric cables, with multi-core conductor and primary insulation (one single covering), is characterised by excellent mechanical properties despite the high content in fireproof load (density in the order of 1.4 g/cm³), high thermal resistance, excellent performance in the cold (-40°C) and fire resistant (it passed the ISO 6722 test and vertical test).

The use of PVC and PE / PP based products with halogenated fireproofing as primary insulation in cables for cars is being replaced by halogen-free solutions, in the light of the environmental impact caused by the recyclability of halogenated products. This trend in the car market will probably extend into other markets in the near future.

Halogen-free formulations commonly used for the manufacture of primary insulation in car cables are based on polypropylene or polyethylene, incorporating a mineral load as a fire retardant agent (generally Alumina Hydrate or Magnesium Hydroxide).

To achieve good flame resistance involves using very high proportions of fireproof mineral load (42% to 70% of the total product weight, depending on the flame test to be checked).

The great problem when proposing a formulation of this kind is to achieve good mechanical properties of traction, elongation and impact at low temperature, and a proper chemical resistance and excellent thermal stability, even when the cable comes into contact with adhesive tapes of a service temperature lower than that of the cable in cable ageing conditions (tape compatibility test).

The EP-A-859375 patent describes a double layer car ignition cable, i.e. comprising a primary insulation (a layer which covers the electric conductor) manufactured using a polyolefin, and a cover made of a silicone by-product.

The DE-A-19632153 patent refers to the use of halogen-free thermoplastic blends for electric cables. These blends are based on polypropylene, ethylene vinyl acetate (EVA) and/or copolymers and Magnesium Hydroxide as fireproof mineral load.

The EP-A-893801 and EP-A-893802 patents refer to double layer cables for power transmission, data transmission or both functions combined. At least one of the two layers, with improved mechanical (especially elongation to breakage) and electrical properties, is based on a halogen-free thermoplastic material.

The US-A-5.246.783 patent describes cables with ethylene copolymer base polymer primary insulation with at least one C₃-C₂₀ α-olefin.

The WO-A-96/23311 patent refers to low voltage double layer thermoplastic cables, suitable for high currents. The primary insulation, designed to be used at Service Temperatures of lower than 70°C, is made based on polyethylene and with Carbon Black as an additive, while the cover, designed for maximum Service Temperatures of 90°C, is made based on thermoplastic elastomers (PP/EPR, PP/EPDM two-phase blends) with Carbon Black as an additive.

None of these antecedents embraces a thermoplastic formulation free of halogens and heavy metals (environment friendly) suitable to produce reduced insulations (thickness of insulating wall: 0.25 mm) and/or ultrafine insulations (thickness of insulating wall: 0.20 mm) for class C low voltage cables (Service Temperature: -40°C to +125°C) for cars, and characterised by a density of 1.4 g/cm³, good mechanical properties of traction, elongation and impact at low temperature, a proper chemical resistance to the car's chemical agents and excellent thermal stability, capable of passing such a demanding test as the one relating to compatibility with adhesive tape.

This invention refers to coverings for low voltage cables based on thermoplastic material formulated as a blend of:
1) A rigid phase, a blend of different polypropylenes with nucleant agents of an adequate fluidity for extrusion
2) An elastic phase, a blend of different polyethylenes of an adequate fluidity for extrusion, of densities > 0.905 g/cm³
3) A fireproof mineral load (magnesium hydroxide) with synergic agents.

This blend is characterised by proportions of 50-80 for the rigid phase with regard to 50-20 for the elastic phase.

The composition of the rigid phase is established on the basis of a blend of:
a) High impact copolymer polypropylene with nucleant agents (MER 230°C/2.16 Kg > 1.5 g/10 min, Traction Elasticity Module > 1000 MPa and Traction Resistance at the elastic limit > 20 MPa according to ISO 527/1+2, Vicat Temperature > 125°C according to ISO 306) and
b) High molecular weight random polypropylene (MFR 230°C/2.16 Kg > 1.5 g/10 min, Traction Elasticity Module > 800 MPa and Traction Resistance at the elastic limit > 20 MPa according to ISO 527/1+2, Vicat Temperature > 125°C according to ISO 306).

Blends of a) and b) in proportions comprised between 50/50 and 90/10 allow a good balance between resistance to cold (-40°C) and resistance to abrasion to be obtained.

The composition of the rigid phase is established on the basis of a blend of:
c) High impact copolymer enhanced polyethylene resin produced by INSITE (MFR 190°C/2.16 Kg > 0.5 g/10 min, Tensile yield > 10 MPa and Ultimate Elongation > 500% according to ASTM D-882 MPa, Vicat softening point > 100°C according to ISO 306) and
d) Polyolefin Plastomer produced by INSITE (MFR 190°C/2.16 Kg > 0.5 g/10 min, Tensile yield > 7 MPa and Ultimate Elongation > 500% according to ASTM D-882 MPa, Vicat softening point > 70°C according to ISO 306).

Blends of c) and d) in proportions comprised between 50/50 and 90/10 allow a good balance between resistance to cold (-40°C) and resistance to abrasion to be obtained.

With regard to the fireproof mineral load, required to pass the different flame tests, and given the polymer transformation Temperature in the rigid phase, the use of magnesium hydroxide was proposed, with a granulometric distribution as follows:
d10: 0.50 - 0.80 µm
d50: 1.40-1.80µm
d90: 2.80 - 4.80 µm
with a specific surface between 4.0 - 6.0 m²/g.

These characteristics, combined with the need for superficial treatment of the magnesium hydroxide which enables the fireproofing characteristics to be improved and acceptable elongation values to be obtained.

The primary insulation thicknesses (0.20 - 0.25 mm) enable the quantity of fireproofing to be optimised, but the fire test was very strict (90°), for which reason the minimum quantity (established empirically) of Magnesium Hydroxide needed to pass this test was 55% - 70% of the total weight of the formula, providing a quantity of 0.5% - 2% of the total weight of the formula of an EVA (70% Acetate) is added as a synergic agent.

All of this leads us to the following formulation:

| | |
|---|---|
| High impact copolymer polypropylene | 90 - 50 > 7.0% - 28.0% |
| Random Polypropylene | 10 - 50 > 7.0% - 28.0% |
| Enhanced polyethylene resin | 50 - 10 > 7.0%- 17.0% |
| Polyolefin Plastomer | 50 - 90 > 7.0% - 17.0% |
| Magnesium Hydroxide | 55% - 70% |
| EVA 700 | 0.5% - 2.0% |
| Irganox 1010 | 1.0% - 5.0% |
| Irganox MD 1024 | 0.1% - 0.5% |

### DESCRIPTION OF A PRACTICAL EXAMPLE

The covering for low voltage cables in this invention is characterised by its having a reduced and/or ultrafine primary insulation based on thermoplastic material formulated as a blend of: a rigid phase, a blend of different polypropylenes with nucleant agents, of an adequate fluidity for extrusion; an elastic phase, a blend of different polyethylenes of an adequate fluidity for extrusion, of densities > 0.906 g/cm³; and a fireproof mineral load, Magnesium Hydroxide, with synergic agents.

The rigid phase is a blend of high impact copolymer polypropylene with nucleant agents (MFR 230°C/2.16 Kg > 1.5 g/10 min, Traction Elasticity Module > 1000 MPa and Traction Resistance at the elastic limit > 20 MPa according to ISO 527/1+2, Vicat Temperature > 125°C according to ISO 306) and high molecular weight random polypropylene (MFR 230°C/2.16 Kg > 1.5 g/10 min, Traction Elasticity Module > 800 MPa and Traction Resistance at the elastic limit > 20 MPa according to ISO 527/1+2, Vicat Temperature > 125°C according to ISO 306) in cop PP / random PP proportions comprised between 50/50 and 90/10.

The elastic phase is characterised by a blend of high impact copolymer enhanced polyethylene resin produced by INSITE (MFR 190°C/2.16 Kg > 0.5 g/10 min, Tensile yield > 10 MPa and Ultimate Elongation > 500% according to ASTM D-882 MPa, Vicat softening point > 100°C according to ISO 306) and Polyolefin Plastomer produced by INSITE (MFR 190°C/2.16 Kg > 0.5 g/10 min, Tensile yield > 7 MPa and Ultimate Elongation > 500% according to ASTM D-882 MPa, Vicat softening point > 70°C according to ISO 306) in Enhanced polyethylene / Polyolefin Plastomer proportions comprised between 50/50 and 10/90.

The fireproofing system is based on magnesium hydroxide, with the following granulometric distribution:
d10: 0.50 - 0.80 µm
d50: 1.40 -1.80 µm
d90: 2.80 - 4.80 µm with a specific surface between 4.0 - 6.0 m²/g and a superficial treatment which enables the fireproofing characteristics to be improved and acceptable elongation values to be obtained, in proportions of 55% - 70% weight over the total weight of the formula.

The primary insulation corresponds to the following thermoplastic formulation:

| | |
|---|---|
| High impact copolymer polypropylene | 70 > 25% |
| Random Polypropylene | 30 > 25% |
| Enhanced polyethylene resin | 40 > 11.2% |
| Polyolefin Plastomer | 60 > 11.2% |
| Magnesium Hydroxide | 60% |
| EVA 700 | 1% |
| Irganox 1010 | 2.5% |
| Irganox MD 1024 | 0.3% |

The concept expressed having been established, the following is a list of claims, so summarising the new features we wish to claim:

## Claims

1. "**COVERING FOR LOW VOLTAGE CABLES**", for cars, aviation, boats, **characterised by** having reduced and/or ultrafine insulation based on a thermoplastic material formulated as a blend of: a rigid phase, a blend of different polypropylenes with nucleant agents, of an adequate fluidity for extrusion; an elastic phase, a blend of different polyethylenes of an adequate fluidity for extrusion, of densities > 0.906 g/cm³; and a fireproof mineral load, Magnesium Hydroxide, with synergic agents.

2. "**COVERING FOR LOW VOLTAGE CABLES**", as per the claim above, **characterised by** proportions of 50-80 in the rigid phase with regard to 50-20 in the elastic phase.

3. "**COVERING FOR LOW VOLTAGE CABLES**", as per claim 1, **characterised by** proportions in the rigid phase with regard to the elastic phase of 72/28.

4. "**COVERING FOR LOW VOLTAGE CABLES**", as per claim 1, the rigid phase is **characterised by** a blend of high impact copolymer polypropylene with nucleant agents (MFR 230°C/2.16 Kg > 1.5 g/10 min, Traction Elasticity Module > 1000 MPa and Traction Resistance at the elastic limit > 20 MPa according to ISO 527/1+2, Vicat Temperature > 125°C according to ISO 306) and high molecular weight random polypropylene (MFR 230°C/2.16 Kg > 1.5 g/10 min, Traction Elasticity Module > 800 MPa and Traction Resistance at the elastic limit > 20 MPa according to ISO 527/1+2, Vicat Temperature > 125°C according to ISO 306) in cop PP / random PP proportions comprised between 50/50 and 90/10.

5. "**COVERING FOR LOW VOLTAGE CABLES**", as per claim 4, the rigid phase is **characterised by** a blend of a high impact copolymer polypropylene with nucleant agents and a high molecular weight random polypropylene in the proportions of 70/30.

6. "**COVERING FOR LOW VOLTAGE CABLES**", as per claim 1, the elastic phase is **characterised by** a blend of high impact copolymer enhanced polyethylene resin produced by INSITE (MFR 190°C/2.16 Kg > 0.5 g/10 min, Tensile yield > 10 MPa and Ultimate Elongation > 500% according to ASTM D-882 MPa, Vicat softening point > 100°C according to ISO 306) and Polyolefin Plastomer produced by INSITE (MFR 190°C/2.16 Kg > 0.5 g/10 min, Tensile yield > 7 MPa and Ultimate Elongation > 500% according to ASTM D-882 MPa, Vicat softening point > 70°C according to ISO 306) in Enhanced polyethylene / Polyolefin Plastomer proportions comprised between 50/50 and 10/90.

7. "**COVERING FOR LOW VOLTAGE CABLES**", as per claim 6, the elastic phase is **characterised by** a blend of a high impact copolymer enhanced polyethylene resin and a Polyolefin Plastomer in the proportions of 40/60.

8. "**COVERING FOR LOW VOLTAGE CABLES**", as per claim 1, characterised because the fireproofing system is based on magnesium hydroxide, with the following granulometric distribution:
d10 0.50 - 0.80 µm
d50: 1.40 - 1.80 µm
d90: 2.80 - 4.80 µm
with a specific surface between 4.0 - 6.0 m²/g and a superficial treatment which enables the fireproofing characteristics to be improved and acceptable elongation values to be obtained, in proportions of 55% - 70% weight over the total weight of the formula.

9. "**COVERING FOR LOW VOLTAGE CABLES**", as per claim 8, **characterised by** having a proportion of Magnesium Hydroxide of 60% weight over the total weight of the formula.

10. "**COVERING FOR LOW VOLTAGE CABLES**", as per the claim above, **characterised by** having a proportion of EVA (70% Acetate), used as a synergic agent in the fireproofing, of 0.5% - 2% of the total weight of the formula.

11. "**COVERING FOR LOW VOLTAGE CABLES**", as per claim 10, **characterised by** having a proportion of EVA of 1% weight over the total weight of the formula.

12. "**COVERING FOR LOW VOLTAGE CABLES**", as per claim 1, characterised because the primary insulation corresponds to the following thermoplastic formulation:
| | |
|---|---|
| High impact copolymer polypropylene | 70 > 25% |
| Random Polypropylene | 30 > 25% |
| Enhanced polyethylene resin | 40 > 11.2% |
| Polyolefin Plastomer | 60 > 11.2% |
| Magnesium Hydroxide | 60% |
| EVA 700 | 10% 1% |
| Irganox 1010 | 25% |
| Irganox MD 1024 | 0.3% |
